# EUROPEAN PATENT APPLICATION

(11) **EP 4 835 262 A1**
(43) Date of publication of application: **04.11.2026**
(21) Application number: 26176097.9
(22) Date of filing: 01.05.2026
(51) Int. Cl.: F01D 25/12, F02C 7/06, F02C 7/224

(54) **GAS TURBINE PROPULSION SYSTEM WITH AN ACTIVE MAGNETIC BEARING**

(30) Priority: 02.05.2025 US 202519197574
(71) Applicant: RTX Corporation, Farmington, CT 06032 (US)
(72) Inventor: POHL, Andrew, Ballston Lake, 12019 (US); STEHLIK, Eric, West Hartford, 06110 (US); NELSON, Alexander R., Amston, 06231 (US)
(74) Representative: Dehns

(57) **Abstract**

A gas turbine engine (20) is provided that includes a compressor section (29), a combustor section (30), a turbine section (31), a cryogenic fuel system (60), and an active magnetic bearing, AMB (76). The cryogenic fuel system (60) is configured to provide a first cryogenic fuel flow to the combustor section (29) for combustion within the combustor section (29). The active magnetic bearing, AMB (76) supports a component within the engine (20), and includes an AMB rotor (78), an AMB stator (80), and an AMB control system (82). The AMB stator (80) includes a cooling passage (98). The AMB control system (82) is configured to control a second cryogenic fuel flow from the cryogenic fuel system (60) through the cooling passage (98) within the AMB stator (80) during operation of the gas turbine engine (20).

## Description

### TECHNICAL FIELD

The present disclosure relates to gas turbine propulsion systems in general and to gas turbine propulsion systems that utilize active magnetic bearings in particular.

### BACKGROUND INFORMATION

A gas turbine engine includes bearings to rotatably support various rotors. Various types and configurations of bearings are known in the art. While these known bearings have various benefits, there is still room in the art for improvement. There is a need in the art, for example, for a bearing which can reduce lubricant and/or cooling demand on turbine engine lubricant and/or cooling systems.

### SUMMARY OF THE DISCLOSURE

According to an aspect of the present invention, a gas turbine engine is provided that includes a compressor section, a combustor section, a turbine section, a cryogenic fuel system, and an active magnetic bearing (AMB). The cryogenic fuel system is configured to provide a first cryogenic fuel flow to the combustor section for combustion within the combustor section. The active magnetic bearing (AMB) supports a component within the engine, and includes an AMB rotor, an AMB stator, and an AMB control system. The AMB stator includes a cooling passage. The AMB control system is configured to control a second cryogenic fuel flow from the cryogenic fuel system through the cooling passage within the AMB stator during operation of the gas turbine engine.

In embodiments, the AMB stator may have a stator body that is formed from a plurality of laminations. The stator body may have a plurality of teeth that extend radially to define a central bore. A winding may be wrapped around each tooth of the plurality of teeth, and each lamination of the plurality of laminations may comprise a superconductive material.

In embodiments of any of the above, the superconductive material may be a Type-I superconductive material, or a Type-II superconductive material, or the like.

In embodiments of any of the above, the cooling passage may include a plurality of cooling passages. Each tooth of the plurality of teeth may include a respective cooling passage, and the cooling passages may extend between a first axial end of the stator body and a second axial end of the stator body.

In embodiments of any of the above, the stator body may include a base segment and a plurality of teeth extending outwardly from the base segment. Each tooth may include a distal end, and the distal ends may collectively define a central bore. The cooling passage may be disposed within the base segment.

In embodiments of any of the above, the cooling passage may extend circumferentially within the base segment.

In embodiments of any of the above, the AMB control system may be configured to control an electrical energy provided to a plurality of AMB stator windings and to control the second cryogenic fuel flow through the cooling passage within the AMB stator. The control of the second cryogenic fuel flow through the cooling passage may be based on the electrical energy provided to the plurality of AMB stator windings.

In embodiments of any of the above, the AMB control system may be configured to control the second cryogenic fuel flow through the cooling passage within the AMB stator. The control of the second cryogenic fuel flow through the cooling passage may be based on input from a temperature sensor.

In embodiments of any of the above, the AMB may be disposed within a compartment that is maintained at a compartment pressure. The compartment pressure is greater than an ambient pressure during operation of the gas turbine engine.

In embodiments of any of the above, the AMB stator may include a stator body that is formed from a plurality of laminations that comprise a superconductive material. The superconductive material may have a first critical temperature at an ambient pressure, and a second critical temperature at the compartment pressure, and the second critical temperature may be higher than the first critical temperature.

In embodiments of any of the above, the AMB stator may have a plurality of stator winding zones. The plurality of stator winding zones may be configured to provide axially reactive forces and radially reactive forces during operation of the gas turbine engine.

In embodiments of any of the above, the plurality of stator winding zones may include a first axial end stator winding zone and a second axial end stator winding zone, and a middle stator winding zone. The first axial end stator winding zone and the second axial end stator winding zone may be configured to provide axial and radial reactive forces during operation of the gas turbine engine, and the middle stator winding zone may be configured to provide radial reactive forces during operation of the gas turbine engine.

According to an aspect of the present invention, a gas turbine engine is provided that includes a compressor section, a combustor section, a turbine section, a cryogenic fuel system, an active magnetic bearing (AMB), and a heat exchanger. The cryogenic fuel system is configured to provide a first cryogenic fuel flow to the combustor section for combustion within the combustor section. The active magnetic bearing (AMB) supports a component within the engine, and includes an AMB rotor, an AMB stator that includes a cooling passage, and an AMB control system. The heat exchanger is configured to receive a second cryogenic fuel flow and an intermediate cooling medium flow. The heat exchanger is configured to conduct heat transfer between the intermediate cooling medium flow and the second cryogenic fuel flow. The AMB control system is configured to direct the intermediate cooling medium flow from the heat exchanger to the AMB stator, through the cooling passage in the AMB stator, and back to the heat exchanger.

In embodiments, the intermediate cooling medium flow may be a flow of liquid hydrogen, or a supercooled air flow.

In embodiments of any of the above, the AMB stator may be configured to direct a portion of the supercooled air flow directed to the AMB stator into a gap between the AMB stator and the AMB rotor.

According to an aspect of the present invention, a method for supporting a component disposed in a gas turbine engine is provided. The gas turbine engine includes a compressor section, a combustor section, a turbine section, and a cryogenic fuel system that is configured to provide a first cryogenic fuel flow to the combustor section for combustion within the combustor section. The method includes providing an active magnetic bearing (AMB) that includes an AMB rotor and an AMB stator, wherein the AMB stator includes a cooling passage, and wherein the AMB rotor is engaged with the component. The AMB stator includes a stator body that is formed from a plurality of laminations, and the plurality of laminations comprise a superconductive material. The method further includes controlling a second cryogenic fuel flow from the cryogenic fuel system during operation of the gas turbine engine to maintain the stator body at a temperature below a critical temperature of the superconductive material.

In embodiments, the method may include directing the second cryogenic fuel flow through the cooling passage within the AMB stator during operation of the gas turbine engine.

In embodiments of any of the above, the method may include directing the second cryogenic fuel flow through a heat exchanger. The heat exchanger may be configured to conduct heat transfer between an intermediate cooling medium flow and the second cryogenic fuel flow. The method may further include directing the intermediate cooling medium flow in a loop from the heat exchanger to the AMB stator, through the cooling passage in the AMB stator, and back to the heat exchanger.

The foregoing features and elements may be combined in various combinations without exclusivity, unless expressly indicated otherwise. For example, aspects and/or embodiments of the present disclosure may include any one or more of the individual features or elements disclosed above and/or below alone or in any combination thereof. These features and elements as well as the operation thereof will become more apparent in light of the following description and the accompanying drawings. The following description and drawings are intended to be exemplary in nature and non-limiting.

### BRIEF DESCRIPTION OF THE DRAWINGS

FIG. 1 is a diagrammatic illustration of a geared gas turbine engine.
FIG. 2 is a diagrammatic illustration of a gas turbine propulsion system that includes a gas turbine engine and a cryogenic fuel system.
FIG. 3 is a diagrammatic view of an active magnetic bearing embodiment.
FIG. 4 is a diagrammatic view of a stator lamination.
FIG. 5A is a diagrammatic view of a stator lamination tooth embodiment.
FIG. 5B is a diagrammatic view of a stator lamination tooth embodiment.
FIG. 5C is a diagrammatic view of a stator lamination tooth embodiment.
FIG. 6 is a diagrammatic illustration of a present disclosure active magnetic bearing embodiment.
FIG. 7 is a block diagram representing operational aspects of the present disclosure.
FIG. 8 is a diagrammatic illustration of a present disclosure active magnetic bearing embodiment.
FIG. 9 is a diagrammatic illustration of a present disclosure active magnetic bearing embodiment.
FIG. 10 is a diagrammatic illustration of a present disclosure active magnetic bearing embodiment.
FIG. 11 is a diagrammatic illustration of a present disclosure active magnetic bearing embodiment.
FIG. 12 is a diagrammatic illustration of a present disclosure active magnetic bearing embodiment.

### DETAILED DESCRIPTION

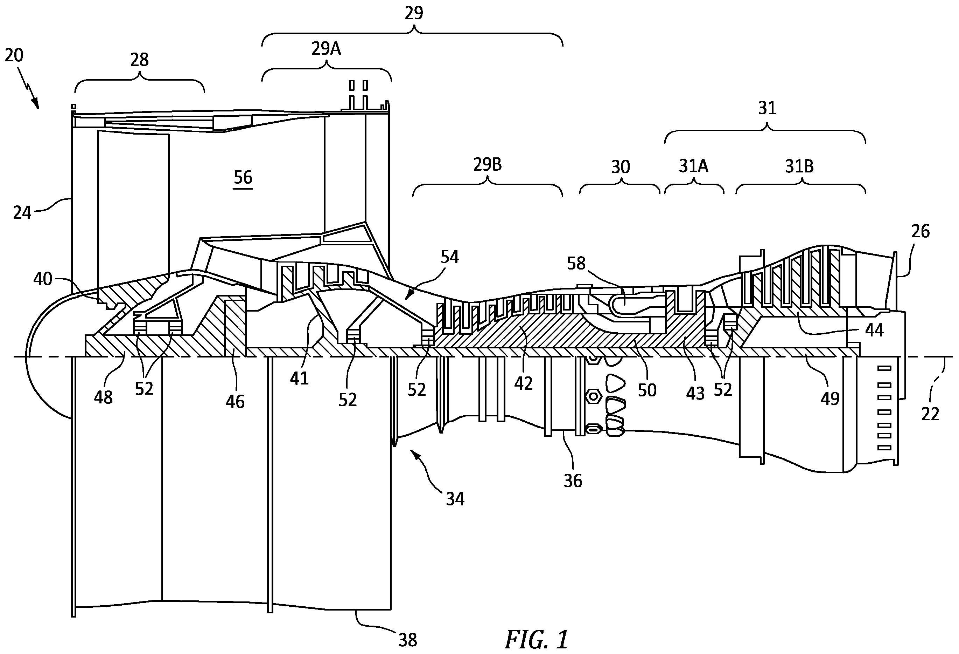

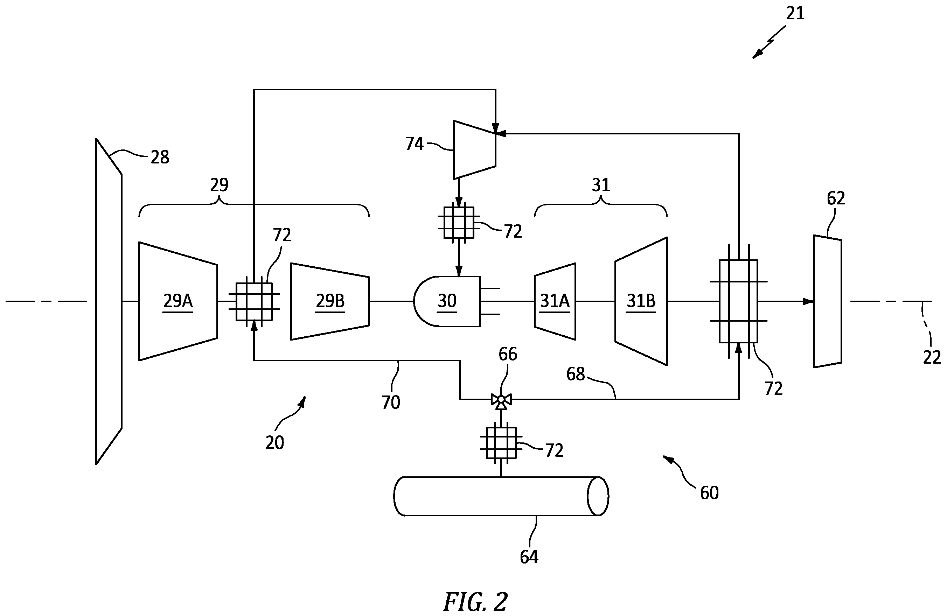

FIG. 1 is a diagrammatic illustration of a geared gas turbine engine 20 for an aircraft propulsion system 21 like that shown in FIG. 2. The gas turbine engine 20 extends along an axial centerline 22 between an upstream airflow inlet 24 and a downstream airflow exhaust 26. The gas turbine engine 20 includes a fan section 28, a compressor section 29, a combustor section 30, and a turbine section 31. The compressor section 29 includes a low pressure compressor (LPC) section 29A and a high pressure compressor (HPC) section 29B. The turbine section 31 includes a high pressure turbine (HPT) section 31A and a low pressure turbine (LPT) section 31B.

The engine sections 28-31B are arranged sequentially along the centerline 22 within an engine housing 34. This engine housing 34 includes an inner case 36 (e.g., a core case) and an outer case 38 (e.g., a fan case). The inner case 36 may house one or more of the engine sections 29A-31B; e.g., a core of the gas turbine engine 20. The outer case 38 may house at least the fan section 28.

Each of the engine sections 28, 29A, 29B, 31A and 31B includes a respective bladed engine rotor 40-44. Each of these engine rotors 40-44 includes a plurality of rotor blades arranged circumferentially around and connected to one or more respective rotor disks.

The fan rotor 40 is connected to a geartrain 46, for example, through a fan shaft 48. The geartrain 46 and the LPC rotor 41 are connected to and driven by the LPT rotor 44 through a low speed shaft 49. The HPC rotor 42 is connected to and driven by the HPT rotor 43 through a high speed shaft 50. The engine shafts 48-50 are rotatably supported by a plurality of bearings 52.

During operation of the gas turbine engine 20, air enters the gas turbine engine 20 through the airflow inlet 24. This air is directed through the fan section 28 and into a core flowpath 54 and a bypass flowpath 56. The core flowpath 54 extends sequentially through the engine sections 29A-31B; e.g., the engine core. The air within the core flowpath 54 may be referred to as "core air". The bypass flowpath 56 extends through a bypass duct, which bypasses the engine core. The air within the bypass flowpath 56 may be referred to as "bypass air".

The core air is compressed by the LPC rotor 41 and the HPC rotor 42 and directed into a combustion chamber 58 of a combustor in the combustor section 30. Fuel is injected into the combustion chamber 58 and mixed with the compressed core air to provide a fuel-air mixture. This fuel-air mixture is ignited and combustion products thereof flow through and sequentially cause the HPT rotor 43 and the LPT rotor 44 to rotate. The rotation of the HPT rotor 43 and the LPT rotor 44 respectively drive rotation of the HPC rotor 42 and the LPC rotor 41 and, thus, compression of the air received from a core airflow inlet. The rotation of the LPT rotor 44 also drives rotation of the fan rotor 40. The rotation of the fan rotor 40 propels the bypass air through and out of the bypass flowpath 56.

As will be detailed herein, aspects of the present disclosure are directed to an aircraft propulsion system 21 that is configured to combust a cryogenic fuel such as liquid/compressed/supercritical hydrogen, methane, ammonia, or the like.

FIG. 2 schematically illustrates a gas turbine engine propulsion system 21 that includes a gas turbine engine 20 and a cryogenic fuel system 60. The gas turbine engine 20 includes a fan section 28, a low pressure compressor (LPC 29A), a high pressure compressor (HPC 29B), a combustor 30, a high pressure turbine (HPT 31A), a low pressure turbine (LPT 31B), and a nozzle 62. A core flow path extends through the LPC 29A, the HPC 29B, the combustor 30, the HPT 31A, and the LPT 31B. A bypass flow path (not shown) may be defined by a nacelle (not shown). The cryogenic fuel system 60 supplies fuel from a cryogenic fuel tank 64 to the combustor 30. In this schematic illustration, the cryogenic fuel may be supplied from the cryogenic fuel tank 64 to the combustor 30 through a multi-path fuel supply system that includes a flow controller 66, a first flow supply line 68, a second flow supply line 70, a plurality of heat exchangers 72, and an expansion turbine 74. Fuel expanded within the expansion turbine 74 is supplied to the combustor 30 where it is combusted. The gas turbine engine propulsion system 21 schematically illustrated in FIG. 2 is provided to illustrate a non-limiting example of a cryogenic fuel propulsion system that may be used with the present disclosure. The present disclosure is not limited to use with any cryogenic fuel propulsion system configuration, and therefore not limited to use with the system 21 schematically shown in FIG. 2. Other examples of cryogenic fuel propulsion systems that may utilize the present disclosure include other propulsion systems (e.g., various different gas turbine engine configurations, rocket engines, and the like) that operate utilizing a Brayton cycle configuration wherein a gas is compressed, heated, expanded, and then cooled.

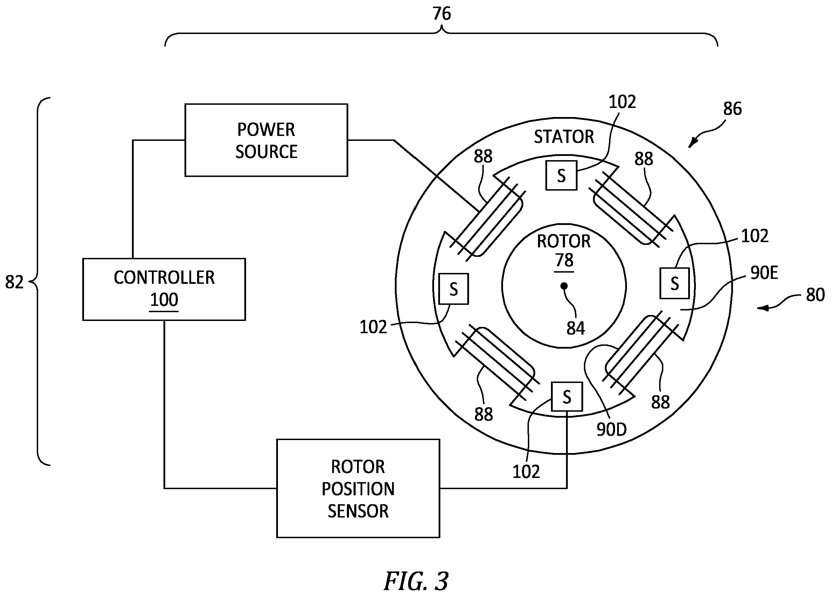

Aspects of the present disclosure include a cooled active magnetic bearing ("AMB 76"). FIG. 3 diagrammatically illustrates an AMB 76 that includes an AMB rotor 78, an AMB stator 80, and an AMB control system 82. The AMB rotor 78 is rotatable about an axially extending rotational axis 84 of the AMB 76. An example of an acceptable AMB rotor 78 includes a ferrous permanent magnet (ferro-permanent magnet) configuration that includes both ferrous materials and permanent magnets to create magnetic fields. The present disclosure is not limited to any particular AMB rotor 78 configuration.

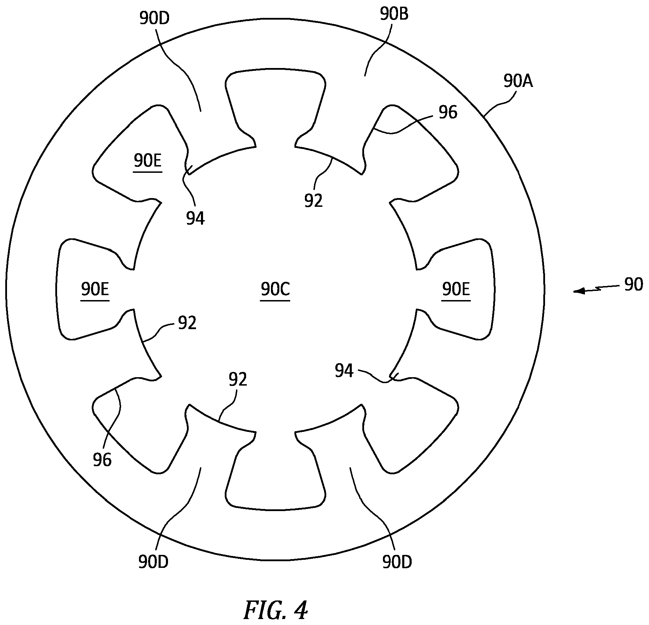

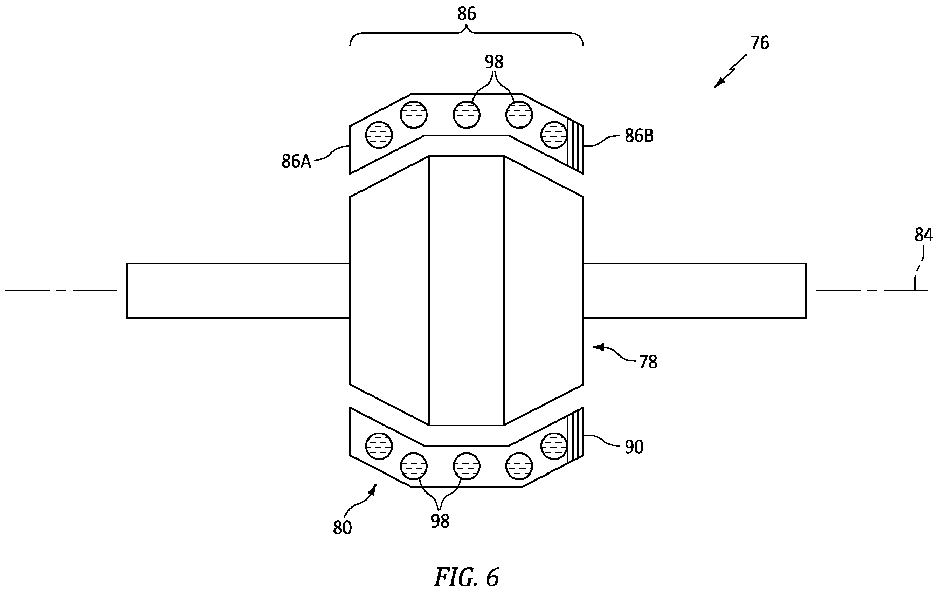

The AMB stator 80 includes a stator body 86 (e.g., see also FIG. 6) and a plurality of stator windings 88. The stator body 86 may be formed from a plurality of laminations 90 disposed in an axially extending stack. The stator body 86 may be described as having a first axial end 86A and a second axial end 86B. FIG. 6 diagrammatically illustrates a plurality of laminations 90 disposed at the second axial end 86B of the stator body 86. Referring to FIG. 4, Each lamination 90 is a thin metallic sheet formed to include an outer perimeter edge surface 90A, a base segment 90B, a central bore 90C, and a plurality of teeth 90D and slots 90E defining the central bore 90C. The base segment 90B extends radially between the outer perimeter edge surface 90A and the plurality of teeth 90D and slots 90E. As can be seen in FIGS. 3 and 4, the teeth 90D and slots 90E are disposed in alternating fashion with a slot disposed between adjacent teeth 90D, or conversely, a tooth 90D disposed between adjacent slots 90E. For clarity sake, the teeth 90D of a stator body 86 are collectively formed from the teeth 90D of the laminations 90 stacked to produce the stator body 86.

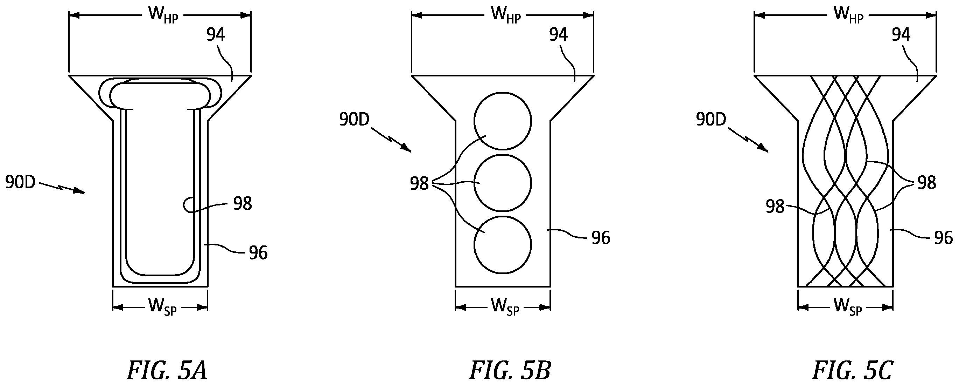

Each stator lamination tooth 90D extends lengthwise from the base segment 90B to distal end 92. The distal end 92 is disposed at the central bore 90C. Each lamination 90 has a thickness that extends between a first planar side surface and a second planar side surface. In some embodiments (e.g., see FIG. 4), each tooth may have a generally T-shaped configuration that includes a head portion 94 disposed at the distal end 92 and a stem portion 96 that extends radially between the head portion 94 and the base segment 90B. In some embodiments, the width of the head portion 94 ("W_{HP}") may be greater than the width of the stem portion 96 ("W_{SP}"). FIGS. 5A-5C diagrammatically illustrate a plurality of stator lamination teeth 90D configurations, each having one or more cooling passages 98 that extend through the thickness of the tooth 90D. In some embodiments, the cooling passages 98 may include a coating (e.g., an epoxy coating) or liner (e.g., a copper liner) disposed at the inner periphery of the cooling passage 98. FIG. 5A illustrates a single cooling passage 98 configuration that substantially mirrors the tooth 90D configuration. FIG. 5B illustrates a tooth 90D having a plurality of cooling passages 98. FIG. 5C illustrates cooling passages 98 configured as gyroidal passages extending within a stator lamination tooth 90D. The cooling passage 98 examples shown in FIGS. 5A-5C are provided to illustrate acceptable cooling passage 98 configurations that may be used and are not intended to be limiting.

FIG. 6 diagrammatically illustrates a stator body 86 having cooling passages 98 that extend circumferentially. The circumferentially extending cooling passages 98 may extend around all or nearly all of the circumference of the stator body 86, or may be configured with circumferential regions; e.g., a first circumferential region that extends along a first half (e.g., 180 degrees) of the stator body 86 and a second circumferential region that extends along the second half of the stator body 86. In some embodiments, the circumferentially extending cooling passages may extend helically and may include one zone (e.g., a helical cooling passage that extends between the axial ends 86A, 86B of the stator body 86) or a plurality of zones; e.g., a plurality of helical cooling passages that collectively extends between the axial ends 86A, 86B of the stator body 86. The present disclosure is not limited to any particular cooling passage configuration.

Each lamination 90 comprises a superconductive material (also referred to as a "superconducting" material). For consistency sake, the material will be referred to herein as a "superconductive" material. The term "superconductive" as used herein refers to a material that exhibits superconductivity, which is a property of certain materials to conduct direct current (DC) electricity without energy loss when they are cooled below a critical temperature. Superconductive materials also expel magnetic fields as they transition to the superconducting state. Superconductive materials may be classified as Type-I superconductive materials or Type-II superconductive materials. Type-I superconductors are usually pure metals that exhibit superconductivity when subjected to relatively low strength magnetic fields. When Type-I superconductors transition to the superconducting state, they completely expel magnetic fields; i.e., perfect diamagnetism - the Meissner effect. Type-II superconductors are usually metal alloys or complex materials that are able to exhibit superconductivity when subjected to magnetic fields at a much higher strength than is permissible with Type-I superconductors. Type-II superconductors have two critical magnetic fields (e.g., lower and upper). Between the lower and upper critical fields, Type-II superconductors allow partial penetration of magnetic fields through vortices, while maintaining superconductivity. Embodiments of the present disclosure may use Type-I or Type-II superconductive materials. To facilitate the description herein, the superconductive material will be referred to generically as "superconductive material" and may include Type-I or Type-II superconductive materials unless otherwise indicated. Non-limiting examples of a superconductive material that may be used include a magnesium diboride (MgB₂) infused stainless steel alloy (e.g., 316 SST), niobium - titanium (Nb-Ti), or the like. The critical temperature will likely vary depending on the specific type of superconductive material utilized in the stator laminations 90. Certain superconductive materials may be referred to as "high temperature superconductors" depending on their critical temperature. Each lamination 90 is electrically insulated from the adjacent lamination 90 on each planar side surface to reduce eddy currents. The electrical insulation may be in the form of a coating on the lamination side surface but the present disclosure is not limited to any particular electrical insulation configuration.

The stator windings 88 are arranged circumferentially about the rotational axis 84 of the AMB 76 in an array. Each stator winding 88 (e.g., a copper wire winding) is wrapped around a lamination tooth 90D of the stator body 86 (i.e., the tooth 90D collectively formed from the laminations 90), extending into the slots 90E disposed one either side of each tooth 90D; e.g., see FIG. 3. Each of the stator windings 88 may be bonded and/or otherwise attached to the respective stator tooth 90D. The stator windings 88 are electrically connected to a power source that can be controlled to provide electrical energy into the stator windings 88.

The AMB control system 82 is configured to control the positioning of the AMB rotor 78 relative to the AMB stator 80 during operation, and to control cooling of the AMB stator 80 by controlling a flow of cryogenic fuel through the AMB stator 80 (or through a heat exchanger when an intermediate cooling loop is included - as will be detailed herein) during operation.

The AMB control system 82 utilizes a controller 100, such as a FADEC, to monitor and control operation of the AMB 76. In some embodiments, the AMB 76 may utilize a dedicated controller; e.g., a controller dedicated to the AMB 76 that may also be in communication with the FADEC. The term "controller" as used herein (regardless of whether the controller is a FADEC or a dedicated controller) refers to a device that included a type of computing device, computational circuit, processor(s), CPU, computer, or the like capable of executing a series of instructions that are stored in memory. The instructions may include an operating system, and/or executable software modules such as program files, system data, buffers, drivers, utilities, and the like. The executable instructions may apply to any functionality described herein to accomplish the same algorithmically and/or coordination of components. A controller 100 may include or may be in communication with one or more memory devices. The present disclosure is not limited to any particular type of memory device, and the memory device may store instructions and/or data in a non-transitory manner. Examples of memory devices that may be used include read-only memory, random access memory, volatile memory, non-volatile memory, static memory, dynamic memory, flash memory, cache memory, and/or any device that stores digital information. A controller 100 may include, or may be in communication with, an input device that enables a user to enter data and/or instructions, and may include, or be in communication with, an output device configured, for example to display information (e.g., a visual display), or to transfer data, etc. The present disclosure is not limited to any particular controller 100 architecture unless specifically stated herein.

The AMB control system 82 may include, or may be in communication with, positional sensors 102 (e.g., see FIG. 3) that sense the position of the AMB rotor 78 within the AMB 76 and provide signal input to the controller 100 regarding the sensed position of the AMB rotor 78. During operation of the AMB 76, electrical currents passing through the stator windings 88 produce magnetic fields that act on the AMB rotor 78. The position of the AMB rotor 78 (sensed by positional sensors 102) may be controlled by the magnetic fields emanating from the stator windings 88. In the event the "levitating" AMB rotor 78 is positionally displaced, the electrical energy directed to the stator windings 88 may be modulated to adjust the magnetic field forces in a magnitude and position that cause the AMB rotor 78 to move to the desired position. In this manner, the AMB 76 is well suited to provide vibrational dampening.

Energy losses that occur during the production and control of the magnetic fields used to levitate the AMB rotor 78 are manifested in the form of thermal energy that increases the temperature of the AMB 76 components. To reap the electrical benefits of the superconductive material within the laminations 90, the present disclosure AMB control system 82 is configured to control a flow of cryogenic fuel through the AMB stator 78 during operation of the gas turbine engine propulsion system 21; e.g., see the cryogenic fuel system 60 of the propulsion system 21 shown in FIG. 2 and described herein. As disclosed herein, the present disclosure AMB stator 78 is configured with cooling passages 98. The cooling passages 98 shown in FIGS. 5A-5C may extend in a true axial direction (i.e., parallel to the rotational axis 84 of the AMB 76), or these cooling passages 98 may incorporate an amount of circumferential twist in the axial transition between the first and second axial ends 86A, 86B of the stator body 86. The cooling passages 98 shown in FIG. 6 may extend circumferentially, including a helical configuration. The present disclosure AMB control system 82 is configured to control the cooling of the AMB stator 80 by controlling the flow of cryogenic fuel through the stator during operation.

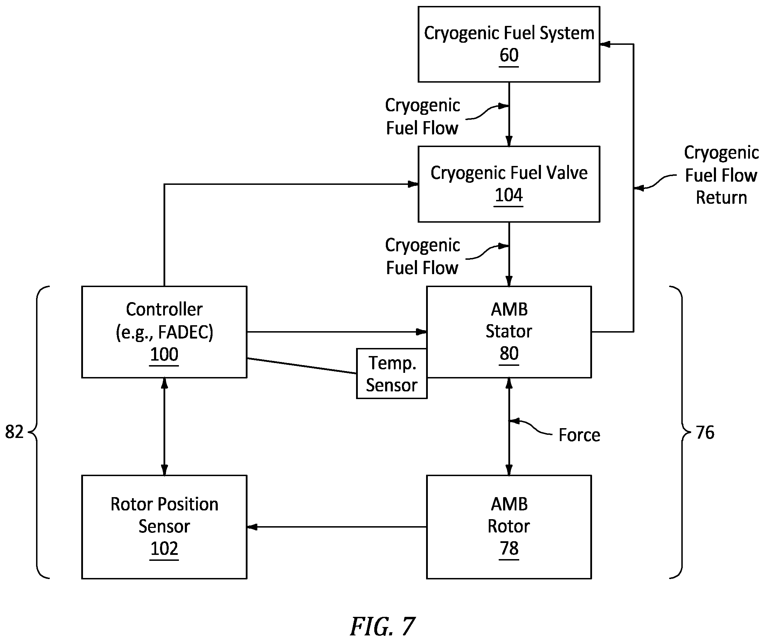

FIG. 7 illustrates a block diagram representing operational aspects of the present disclosure. Cryogenic fuel (e.g., liquid/compressed/supercritical hydrogen, methane, ammonia, or the like) from the cryogenic fuel system 60 of the propulsion system 21 (e.g., see also FIG. 2) is in fluid communication with the flow valve 104 (e.g., "cryogenic fuel valve") of the AMB control system 82. The flow valve 104 is in fluid communication with the AMB stator 80. The flow valve 104 is in signal communication with the controller 100. The controller 100, in turn, is in signal communication with the AMB stator 80 and with the rotor positional sensors 102.

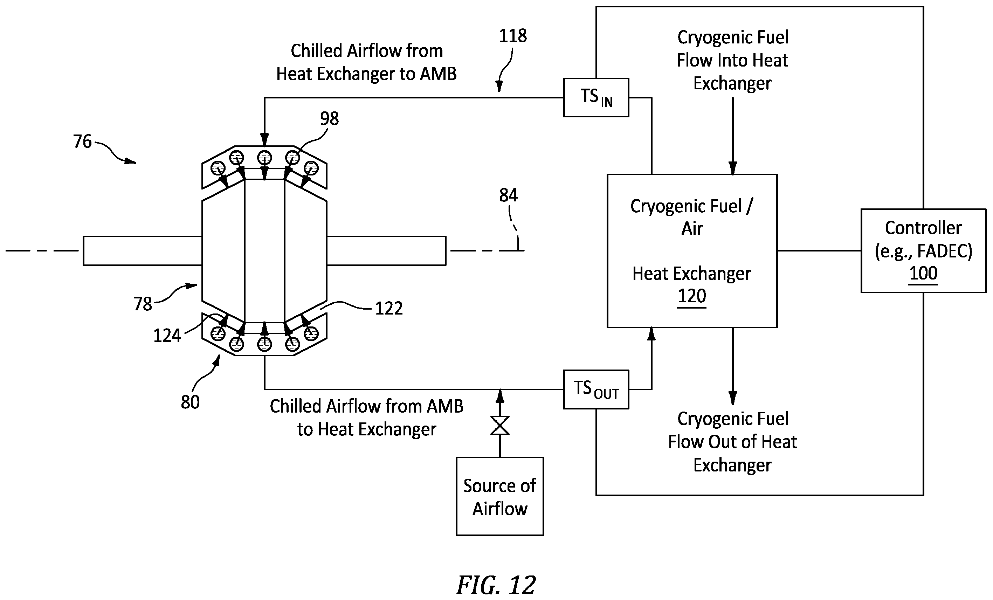

During operation of the AMB 76, the temperature of the AMB stator 80 may be sensed and evaluated relative to the critical temperature of the superconductive material within the stator laminations 90. The temperature of the AMB stator 80 may be sensed directly by a temperature sensor (e.g., see FIG. 7) or the temperature of the AMB stator 80 may be determined indirectly; e.g., by the temperature of the cryogenic fuel exiting the AMB stator 80, or by a difference between the temperature of the cryogenic fuel entering the AMB stator 80 and the temperature of the cryogenic fuel exiting the AMB stator 80, or by a temperature of an intermediate cooling medium (e.g., see FIG. 12), or the like. If the temperature of the stator laminations 90 is below the critical temperature, the controller 100 may execute stored instructions to control the cryogenic fuel flow valve 104 to provide a flow of cryogenic fluid through the AMB stator 80 that maintains the temperature of the AMB stator 80 below the critical temperature. When the superconductive material is below the critical temperature, the superconductive material enhances the magnetic fields (e.g., increases the strength of the magnetic fields) produced by the electrical energy passing through the stator windings 88. Hence, stronger magnetic fields may be used for a given level of electrical energy input into the windings 88, or a given strength magnetic field may be produced using less electrical energy input within the windings 88. If the temperature of the stator laminations 90 is at or above the critical temperature, the controller 100 may execute stored instructions to control the cryogenic fuel flow valve 104 to provide a flow of cryogenic fluid through the AMB stator 80 that will decrease the temperature of the AMB stator 80 below the critical temperature.

During operation of the AMB 76, the AMB rotor 78 may deviate from a desired position as a result of loading, vibration, or the like. The positional sensors 102 are configured to sense the deviation and provide representative signals to the controller 100. Based on the signal input from the positional sensors 102, the controller 100 may execute stored instructions to control the flow of electrical energy to the stator windings 88 to alter the strengths of the relative magnetic fields and thereby modulate the forces acting on the AMB rotor 78. In this manner the positional deviation of the AMB rotor 78 may be corrected. In those instances, wherein there is a change in the level of electrical energy provided to the stator windings 88 of the AMB stator 80, there may be a corresponding thermal change in the AMB 76; e.g., an increase in electrical energy may produce an increase in thermal energy, and a decrease in electrical energy may produce a decrease in thermal energy. The controller 100 may be configured to control the cooling of the AMB 76 (e.g., the flow of cryogenic fuel) based on the level of electrical energy input to the stator windings 88 and the thermal energy associated therewith.

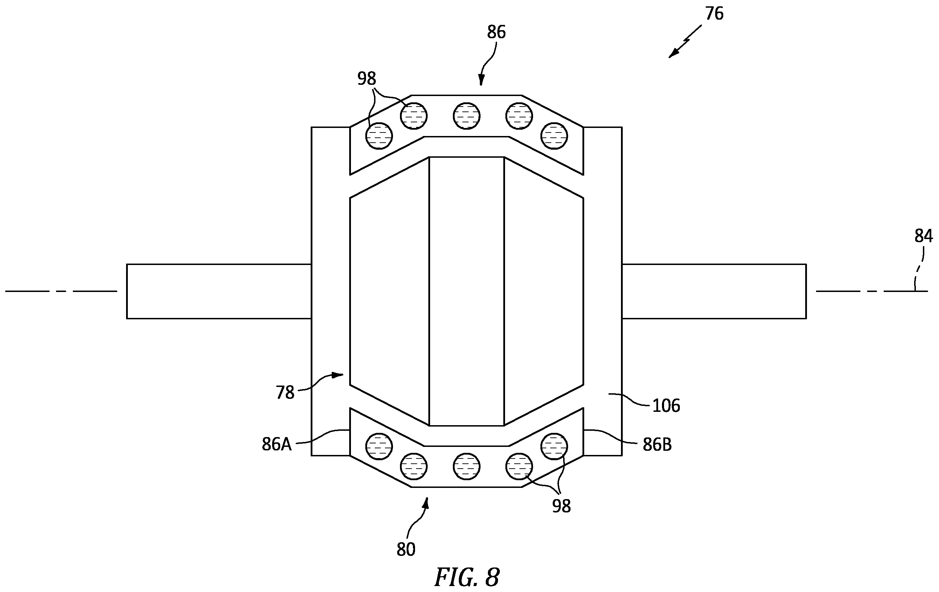

FIG. 8 illustrates an embodiment of an AMB 76 according to the present disclosure wherein the AMB 76 is disposed within a compartment 106 configured to maintain the AMB 76 is an elevated pressure environment. The compartment 106 is shown diagrammatically in FIG. 8 as closely enclosing the AMB rotor 78 and a portion of the AMB stator 80 for illustrative purposes. In a gas turbine application, the AMB 76 may be disposed within an internal compartment of the engine 20 containing gas (e.g., air) that is maintained at a given pressure (or range of pressures) that is elevated relative to ambient pressure during operation of the engine 20. The elevated pressure air may be bled off of a compressor section (e.g., the LPC 29A or the HPC 29B - See FIGS. 1 and 2) at a pressure substantially higher than ambient for component cooling purposes, or to prevent compartment inflow, or for purging purposes, or for the purpose of creating an elevated pressure environment for the AMB 76, or the like, or any combination thereof. The electromagnetic properties of superconductive materials (e.g., the critical temperature) may be a function of pressure. In some instances, the critical temperature of a superconductive material may rise as a function of pressure. In such a case, a pressurized environment for the AMB 76 may be utilized to increase the critical temperature and decrease the cooling requirements of the AMB 76. In addition, in some embodiments the compartment 106 may be configured to create an elevated pressure environment between the AMB stator 80 and the AMB rotor 78 that can function as a fluid film bearing / air bearing that damps relative movement between the AMB stator 80 and the AMB rotor 78. In the event electrical power normally provided to the AMB 76 is terminated, the elevated pressure environment between the AMB stator 80 and the AMB rotor 78 functioning as a fluid film bearing can operate as a redundant damping source.

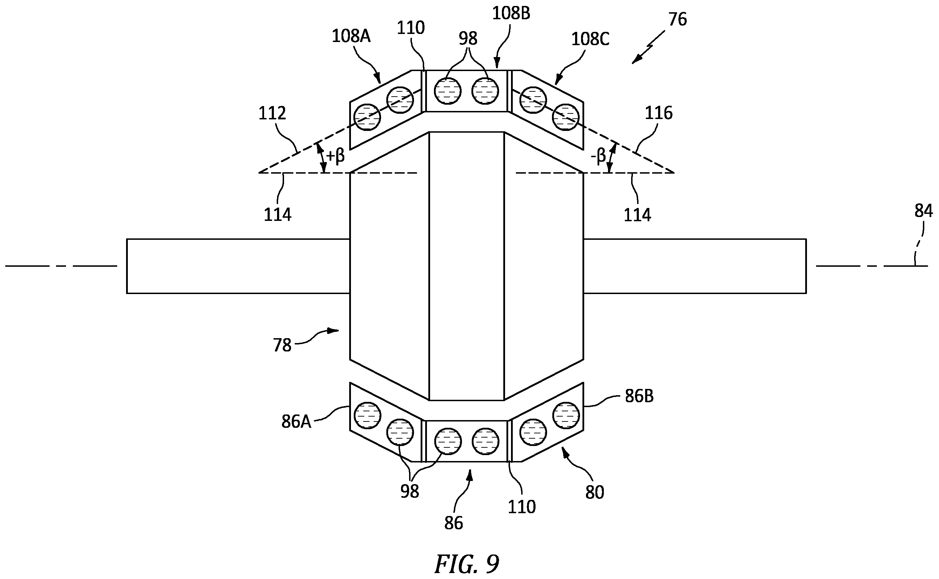

FIG.9 illustrates an embodiment of an AMB 76 according to the present disclosure wherein the AMB stator 80 includes a plurality of axially disposed stator winding zones. FIG. 9 illustrates a first axial end winding zone 108A, a middle stator winding zone 108B, and a second axial end stator winding zone 108C. The first axial end stator winding zone 108A is disposed at the first axial end 86A of the stator body 86. The second axial end stator winding zone 108C is disposed at the second axial end 86B of the stator body 86. The middle stator winding zone 108B is disposed axially between the first axial end stator winding zone 108A and the second axial end stator winding zone 108C. An electrically resistant material 110 is disposed between the first axial end stator winding zone 108A and the middle stator winding zone 108B, and between the middle stator winding zone 108B and the second axial end stator winding zone 108C. Alternatively, an air gap may be disposed between the first axial end stator winding zone 108A and the middle stator winding zone 108B, and between the middle stator winding zone 108B and the second axial end stator winding zone 108C to provide electrical insulation between the respective adjacent winding zones 108A, 108B, 108C. The windings 88 disposed in the first axial end stator winding zone 108A are oriented along a line 112 that extends at an angle positive beta (+ β) relative to the rotational axis 84 of the AMB 76; the line 114 parallel to the rotational axis 84 is used to represent the rotational axis 84. The windings 88 disposed in the second axial end stator winding zone 108C are oriented along a line 116 that extends at an angle negative beta (- β) relative to the rotational axis 84 of the AMB 76; i.e., an angle opposite the orientation angle of the first axial end stator winding zone 108A. The windings 88 disposed in the middle stator winding zone 108B are oriented along a line that extends parallel to the rotational axis 84 of the AMB 76. The arrangement of the first and second axial end stator winding zones 108A, 108C and the middle stator winding zone 108B allows the AMB 76 to provide axially reactive forces (forward and/or aft) and radial reactive forces independent of one another. The ability to produce axial and/or radial reaction forces is understood to enhance the ability of the AMB 76 to counter / cancel undesirable periodic forces; e.g., cancel forces that cause vibrational displacements.

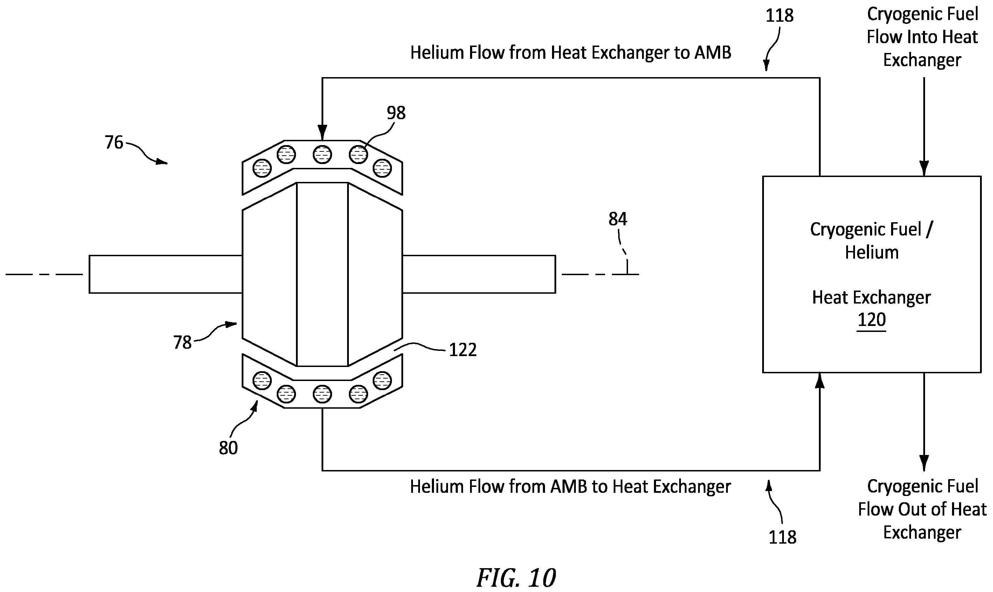

FIG. 10 diagrammatically illustrates an embodiment of the present disclosure AMB 76 that utilizes an intermediate cooling medium disposed within an intermediate cooling loop 118 that is engaged with the AMB 76 and a heat exchanger 120. Cryogenic fuel from the cryogenic fuel system 60 of the propulsion system 21 (e.g., see FIG. 2) is in fluid communication with the heat exchanger 120. The intermediate cooling medium within the loop 118 is directed through the heat exchanger 120, through the AMB stator 80, and back to the heat exchanger 120 to repeat the cycle. The intermediate cooling loop 118 may include componentry (some of which may be in communication with the AMB control system 82 for control purposes) to move the intermediate cooling medium through the loop 118; e.g., a pump for providing motive force to the intermediate cooling medium, fluid flow control devices to control the parameters of the fluid flow, and sensors to sense parameters of the fluid flow. The heat exchanger 120 is configured to conduct heat transfer between the intermediate cooling medium and the cryogenic fuel. Control componentry may also be utilized to control the flow of cryogenic fuel through the heat exchanger 120; e.g., to control the heat transfer between the intermediate cooling medium and the cryogenic fuel within the heat exchanger 120. An example of an acceptable intermediate cooling medium is liquid helium. Liquid helium may be used as a coolant with both Type-I and Type-II superconductive materials. Present disclosure AMB 76 embodiments that include an intermediate cooling loop 118 may provide enhanced temperature control of the cryogenic fuel used to cool the AMB stator 80. The intermediate cooling loop 118 also separates the cryogenic fuel from the AMB 76; i.e., avoids passing the cryogenic fuel through the AMB stator 80.

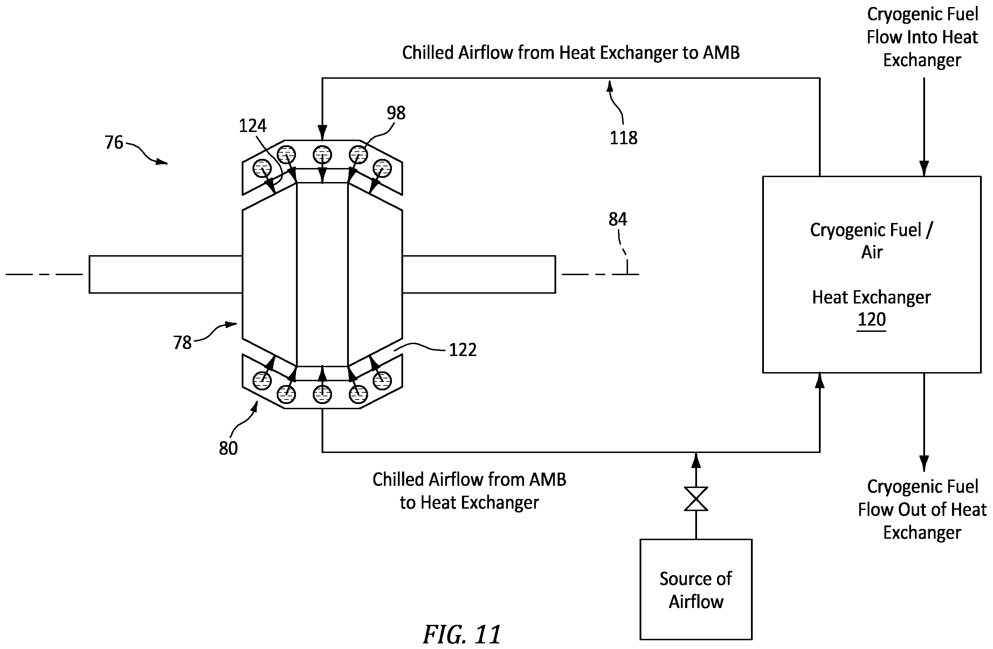

FIG. 11 diagrammatically illustrates another embodiment of the present disclosure AMB 76 that utilizes an intermediate cooling medium (i.e., supercooled air) disposed within an intermediate cooling loop 118 that is engaged with the AMB 76 and a heat exchanger 120. Cryogenic fuel from the cryogenic fuel system 60 of the propulsion system 21 (e.g., see FIG. 2) is in fluid communication with the heat exchanger 120. In this embodiment, supercooled air is disposed within the intermediate cooling loop 118 and is directed through the heat exchanger 120, and through the AMB stator 80. The air exiting the heat exchanger 120 may be referred to as "supercooled air". In some embodiments, the supercooled air passing through the AMB stator 80 may follow closed cooling passages 98 within the AMB stator body 86. In these embodiments, other than some possible inconsequential leakage within the AMB stator 80, the flow of supercooled air exits the AMB stator 80 and is directed back to the heat exchanger 120 to repeat the cycle. In some embodiments, the supercooled air passing through the AMB stator 80 may be a pressurized flow (i.e., at a pressure higher than the air surrounding the AMB 76) and the AMB stator 80 may be configured to direct some amount of the pressurized supercooled air into the gap 122 between the AMB rotor 78 and the AMB stator 80; e.g., as diagrammatically indicated by arrows 124. In these embodiments, the pressurized and supercooled air may function to both augment the electromagnetic forces acting on the AMB rotor 78 to centrally position the AMB rotor 78 relative to the AMB stator 80, and to provide a cooling function to portions of the AMB stator 80 and the AMB rotor 78. In this embodiment, the intermediate cooling loop 118 may include componentry to control and sense the intermediate cooling medium (i.e., air) flow, the heat exchanger 120 is configured to conduct heat transfer between the air and the cryogenic fuel, and control componentry may also be utilized to control the flow of air and/or cryogenic fuel through the heat exchanger 120. Supercooled air may be used as a coolant with both Type-I and Type-II superconductive materials.

As indicated herein, the AMB control system 82 is configured to control both the positioning of the AMB rotor 78 relative to the AMB stator 80 during operation, and to control cooling of the AMB stator 80 by controlling a flow of cryogenic fuel through the AMB stator 80 (or through a heat exchanger 120 when an intermediate cooling loop 118 is included) during operation. Also as indicated herein, the control of the AMB cooling may be accomplished using a controller 100 and fluid control componentry, including flow control valves, pumps, and sensors as appropriate. The present disclosure embodiment shown in FIG. 12 illustrates a temperature sensor ("TS_{IN}") disposed to sense the temperature of the intermediate cooling medium (e.g., air in the example of FIG. 12) that is passed to the AMB 76, and a temperature sensor ("TS_{OUT}") disposed to sense the temperature of the intermediate cooling medium that has exited the AMB 76. The signal data from the temperature sensors and other data inputs (e.g., flight segment data and the like from the FADEC) may be used to actively control the cooling of the AMB 76 and facilitate positional control of the AMB rotor 78 relative to the AMB stator 80. A control structure like that shown diagrammatically in FIG. 12 may be used with other present disclosure AMB system configurations.

While the principles of the disclosure have been described above in connection with specific apparatuses and methods, it is to be clearly understood that this description is made only by way of example and not as limitation on the scope of the disclosure. Specific details are given in the above description to provide a thorough understanding of the embodiments. However, it is understood that the embodiments may be practiced without these specific details.

It is noted that the embodiments may be described as a process which is depicted as a flowchart, a flow diagram, a block diagram, etc. Although any one of these structures may describe the operations as a sequential process, many of the operations can be performed in parallel or concurrently. In addition, the order of the operations may be rearranged. A process may correspond to a method, a function, a procedure, a subroutine, a subprogram, etc.

The singular forms "a," "an," and "the" refer to one or more than one, unless the context clearly dictates otherwise. For example, the term "comprising a specimen" includes single or plural specimens and is considered equivalent to the phrase "comprising at least one specimen." The term "or" refers to a single element of stated alternative elements or a combination of two or more elements unless the context clearly indicates otherwise. As used herein, "comprises" means "includes." Thus, "comprising A or B," means "including A or B, or A and B," without excluding additional elements.

It is noted that various connections are set forth between elements in the present description and drawings (the contents of which are included in this disclosure by way of reference). **It** is noted that these connections are general and, unless specified otherwise, may be direct or indirect and that this specification is not intended to be limiting in this respect. Any reference to attached, fixed, connected or the like may include permanent, removable, temporary, partial, full and/or any other possible attachment option.

No element, component, or method step in the present disclosure is intended to be dedicated to the public regardless of whether the element, component, or method step is explicitly recited in the claims. As used herein, the terms "comprise", "comprising", or any other variation thereof, are intended to cover a non-exclusive inclusion, such that a process, method, article, or apparatus that comprises a list of elements does not include only those elements but may include other elements not expressly listed or inherent to such process, method, article, or apparatus.

While various inventive aspects, concepts and features of the disclosures may be described and illustrated herein as embodied in combination in the exemplary embodiments, these various aspects, concepts, and features may be used in many alternative embodiments, either individually or in various combinations and sub-combinations thereof. Unless expressly excluded herein all such combinations and sub-combinations are intended to be within the scope of the present application. Still further, while various alternative embodiments as to the various aspects, concepts, and features of the disclosures--such as alternative materials, structures, configurations, methods, devices, and components, and so on--may be described herein, such descriptions are not intended to be a complete or exhaustive list of available alternative embodiments, whether presently known or later developed. Those skilled in the art may readily adopt one or more of the inventive aspects, concepts, or features into additional embodiments and uses within the scope of the present application even if such embodiments are not expressly disclosed herein. For example, in the exemplary embodiments described above within the Detailed Description portion of the present specification, elements may be described as individual units and shown as independent of one another to facilitate the description. In alternative embodiments, such elements may be configured as combined elements. It is further noted that various method or process steps for embodiments of the present disclosure are described herein. The description may present method and/or process steps as a particular sequence. However, to the extent that the method or process does not rely on the particular order of steps set forth herein, the method or process should not be limited to the particular sequence of steps described. As one of ordinary skill in the art would appreciate, other sequences of steps may be possible.

## Claims

1. A gas turbine engine, comprising:
a compressor section;
a combustor section;
a turbine section;
a cryogenic fuel system configured to provide a first cryogenic fuel flow to the combustor section for combustion within the combustor section; and
an active magnetic bearing, AMB, supporting a component within the engine, the AMB including an AMB rotor, an AMB stator, and an AMB control system, wherein the AMB stator includes a cooling passage, and the AMB control system is configured to control a second cryogenic fuel flow from the cryogenic fuel system through the cooling passage within the AMB stator during operation of the gas turbine engine.

2. The gas turbine engine of claim 1, wherein the AMB stator has a stator body that is formed from a plurality of laminations, the stator body having a plurality of teeth that extend radially to define a central bore, wherein a winding is wrapped around each tooth of the plurality of teeth, and wherein each lamination of the plurality of laminations comprises a superconductive material.

3. The gas turbine engine of claim 2, wherein the superconductive material is a Type-I superconductive material or a Type-II superconductive material.

4. The gas turbine engine of claim 2 or 3, wherein the cooling passage includes a plurality of cooling passages, and wherein each tooth of the plurality of teeth includes a respective cooling passage of the plurality of cooling passages, and the plurality of cooling passages extend between a first axial end of the stator body and a second axial end of the stator body.

5. The gas turbine engine of any preceding claim, wherein the stator body includes a base segment and a plurality of teeth extending outwardly from the base segment, wherein each tooth of the plurality of teeth includes a distal end, and the distal ends collectively define a central bore, and wherein the cooling passage is disposed within the base segment, optionally wherein the cooling passage extends circumferentially within the base segment.

6. The gas turbine engine of any preceding claim, wherein the AMB control system is configured to control an electrical energy provided to a plurality of AMB stator windings and to control the second cryogenic fuel flow through the cooling passage within the AMB stator, wherein the control of the second cryogenic fuel flow through the cooling passage is based on the electrical energy provided to the plurality of AMB stator windings, and/or
wherein the AMB control system is configured to control the second cryogenic fuel flow through the cooling passage within the AMB stator, wherein the control of the second cryogenic fuel flow through the cooling passage is based on input from a temperature sensor.

7. The gas turbine engine of any preceding claim, wherein the AMB is disposed within a compartment that is maintained at a compartment pressure, and the compartment pressure is greater than an ambient pressure during operation of the gas turbine engine.

8. The gas turbine engine of claim 7, wherein the AMB stator includes a/the stator body that is formed from a/the plurality of laminations that comprise a/the superconductive material;
wherein the superconductive material has a first critical temperature at an ambient pressure, and the superconductive material has a second critical temperature at the compartment pressure, and the second critical temperature that is higher than the first critical temperature.

9. The gas turbine engine of any preceding claim, wherein the AMB stator has a plurality of stator winding zones, and the plurality of stator winding zones are configured to provide axially reactive forces and radially reactive forces during operation of the gas turbine engine, and
optionally wherein the plurality of stator winding zones includes a first axial end stator winding zone and a second axial end stator winding zone, and a middle stator winding zone, the first axial end stator winding zone and the second axial end stator winding zone are configured to provide axial and radial reactive forces during operation of the gas turbine engine, and the middle stator winding zone is configured to provide radial reactive forces during operation of the gas turbine engine.

10. A gas turbine engine, comprising:
a compressor section;
a combustor section;
a turbine section;
a cryogenic fuel system configured to provide a first cryogenic fuel flow to the combustor section for combustion within the combustor section; and
an active magnetic bearing, AMB, supporting a component within the engine, the AMB including an AMB rotor, an AMB stator that includes a cooling passage, and an AMB control system; and
a heat exchanger that is configured to receive a second cryogenic fuel flow and an intermediate cooling medium flow, and wherein the heat exchanger is configured to conduct heat transfer between the intermediate cooling medium flow and the second cryogenic fuel flow;
wherein the AMB control system is configured to direct the intermediate cooling medium flow from the heat exchanger to the AMB stator, through the cooling passage in the AMB stator, and back to the heat exchanger.

11. The gas turbine engine of claim 10, wherein the intermediate cooling medium flow is a flow of liquid hydrogen.

12. The gas turbine engine of claim 10, wherein the intermediate cooling medium flow is a supercooled air flow, optionally wherein the AMB stator is configured to direct a portion of the supercooled air flow directed to the AMB stator into a gap between the AMB stator and the AMB rotor.

13. A method for supporting a component disposed in a gas turbine engine, the gas turbine engine comprising a compressor section, a combustor section, a turbine section, and a cryogenic fuel system that is configured to provide a first cryogenic fuel flow to the combustor section for combustion within the combustor section, the method comprising:
providing an active magnetic bearing, AMB, that includes an AMB rotor and an AMB stator, wherein the AMB stator includes a cooling passage, and wherein the AMB rotor is engaged with the component;
wherein the AMB stator includes a stator body that is formed from a plurality of laminations, and the plurality of laminations comprise a superconductive material; and
controlling a second cryogenic fuel flow from the cryogenic fuel system during operation of the gas turbine engine to maintain the stator body at a temperature below a critical temperature of the superconductive material.

14. The method of claim 13, wherein the method includes directing the second cryogenic fuel flow through the cooling passage within the AMB stator during operation of the gas turbine engine.

15. The method of claim 13, further comprising:
directing the second cryogenic fuel flow through a heat exchanger;
wherein the heat exchanger is configured to conduct heat transfer between an intermediate cooling medium flow and the second cryogenic fuel flow; and
directing the intermediate cooling medium flow in a loop from the heat exchanger to the AMB stator, through the cooling passage in the AMB stator, and back to the heat exchanger.
